# EUROPÄISCHE PATENTANMELDUNG

(11) **EP 2 777 863 A1**
(43) Veröffentlichungstag der Anmeldung: **17.09.2014**
(21) Anmeldenummer: 13004402.7
(22) Anmeldetag: 10.09.2013
(51) Int. Cl.: B23K 26/14, B23K 35/38, B23K 26/38

(54) **Verfahren, Vorrichtung und Verwendung einer Gaszusammensetzung zum Laserbrennschneiden**

(30) Priorität: 11.03.2013 DE 102013004095
(71) Anmelder: Linde Aktiengesellschaft, 80331 München (DE)
(72) Erfinder: Herrmann, Johann, 85716 Unterschleißheim (DE); Scholz, Jürgen, 81379 München (DE)

(57) **Zusammenfassung**

Es wird ein Verfahren (200) zum Laserbrennschneiden vorgeschlagen, bei dem mit einem Schneidkopf (10) ein Laserstrahl (18) auf ein Werkstück (20) fokussiert und ein Schneidgasstrom (14) auf das Werkstück (20) gelenkt wird. Der Schneidkopf (10) und das Werkstück (20) werden mit einer einstellbaren Vorschubgeschwindigkeit (50) relativ zueinander bewegt. Es ist vorgesehen, den Laserstrahl (18) mittels eines Festkörperlasers (17) bei einer Wellenlänge von 400 bis 2.200 nm zu erzeugen und den Schneidgasstrom (14) bei einem Schneidgasdruck von 5 bar bis 35 bar und mit einem Gehalt von 90% bis 99,5% Sauerstoff und im verbleibenden Anteil Kohlendioxid und/oder Helium bereitzustellen. Eine Vorrichtung (100), die zur Durchführung eines derartigen Verfahrens (200) eingerichtet ist, ist ebenfalls Gegenstand der Erfindung.

## Beschreibung

Die Erfindung betrifft ein Verfahren, eine Vorrichtung und die Verwendung einer Gaszusammensetzung zum Laserbrennschneiden.

### Stand der Technik

Bei thermischen Trennverfahren wird ein zu schneidendes Werkstück lokal erwärmt. Das erwärmte Material des Werkstücks kann dann mittels eines Gasstrahls, dem sogenannten Schneidgas, ggf. chemisch umgesetzt und durch den Druck des Gasstrahls aus dem Werkstück ausgetrieben werden. Von Vorteil ist hierbei, dass das Werkzeug, nämlich der verwendete Gasstrahl, nicht stumpf werden kann und dass auf das zu schneidende Werkstück kaum Kraft ausgeübt wird.

Die Energiezufuhr bei thermischen Trennverfahren kann mittels eines Lasers erfolgen, wobei klassischerweise Kohlendioxid-Gaslaser zum Einsatz kommen. Bei Lasertrennverfahren unterscheidet der Fachmann zwischen Laserbrennschneiden, Laserschmelzschneiden und Lasersublimierschneiden. Die vorliegende Erfindung kommt beim Laserbrennschneiden zum Einsatz.

Beim Laserbrennschneiden wird das Material des Werkstücks mittels des Lasers auf eine Zündtemperatur gebracht. Als Schneidgas wird herkömmlicherweise Sauerstoff eingesetzt, der das Material des Werkstücks zumindest teilweise verbrennt und aus der erzeugten Schnittfuge austreibt. Hierdurch ist eine sehr hohe Schneidgeschwindigkeit möglich. Diese liegt bei den erwähnten klassischen Lasern und einer Materialstärke von 1 mm bei knapp 10 m/min. Sie sinkt jedoch bei einer Erhöhung der Materialstärke auf 10 mm auf knapp 0,5 m/min ab (siehe z.B. Fritz, A. und Schulte, G. (Hrsg.): Fertigungstechnik, 7. Aufl. 2006, Berlin: Springer-Verlag).

Beim Laserbrennschneiden wird häufig sogenannter Sauerstoff 3.5 mit einer Reinheit von mindestens 99,95% eingesetzt. Die Schneidgeschwindigkeit kann allerdings nicht beliebig gesteigert werden, weil es sonst, wie nachfolgend noch erläutert, u.a. zu unkontrollierbaren Reaktionen zwischen dem Schneidgas und dem zu bearbeitenden Werkstück kommen kann.

Neuartige Festkörperlaser wie Scheiben-, Faser- und Diodenlaser weisen ferner gegenüber den klassischen Lasern abweichende Einkopplungscharakteristika auf, wie unten im Detail erläutert. Hierdurch können häufig die Vorteile derartiger Laser wie beispielsweise der verbesserte Wirkungsgrad und die hohe Strahlqualität nicht im vollen Umfang genutzt werden.

Daher besteht auch weiterhin der Bedarf nach Verbesserungen beim Laserbrennschneiden, insbesondere zur Erhöhung der Schneidgeschwindigkeit und insbesondere bei der Verwendung von Festkörperlasern.

### Offenbarung der Erfindung

Vor diesem Hintergrund schlägt die vorliegende Erfindung ein Verfahren, eine Vorrichtung und die Verwendung eines Gasgemischs zum Laserbrennschneiden mit den Merkmalen der unabhängigen Patentansprüche vor. Bevorzugte Ausgestaltungen sind jeweils Gegenstand der abhängigen Patentansprüche sowie der nachfolgenden Beschreibung.

### Vorteile der Erfindung

Beim Laserbrennschneiden hat das Schneidgas, wie eingangs erwähnt, zwei Aufgaben zu erfüllen. Es muss das Material des Werkstücks, typischerweise Baustahl, aus der Schnittfuge austreiben und gleichzeitig durch eine Verbrennungsreaktion mit diesem reagieren. Bei der Reaktion zwischen dem Sauerstoff des Schneidgases und dem Material zu unterschiedlichen Oxidationsprodukten wird thermische Energie freigesetzt. Diese unterstützt vor allem bei höheren Materialstärken eines zu bearbeitenden Werkstücks den Schneidvorgang, wodurch bei gegebener Laserleistung deutlich höhere Schnittgeschwindigkeiten möglich sind als bei der Verwendung eines Inertgases wie Stickstoff.

Die Grenzen, innerhalb derer der chemische Verbrennungsprozess kontrolliert abläuft, sind jedoch relativ eng gesteckt. Unkontrollierte Verbrennungsvorgänge sind wiederum einem sauberen Schneidvorgang nicht zuträglich.

Bei geringeren Materialstärken können dabei hohe Schneidgasdrücke von 5 bar und mehr eingesetzt werden, um die Schmelze aus der Schnittfuge auszutreiben. Allerdings muss dabei i.d.R. die Laserleistung reduziert werden, da es sonst zu Überreaktionen des Sauerstoffs und des Materials kommen kann und das Material, wie beispielsweise beim autogenen Brennschneiden, im gesamten Sauerstoffstrom ausgetrieben wird und nicht nur dort, wo auch der Laserstrahl wirkt. Die Schnittfuge würde hierdurch übermäßig breit und unregelmäßig. Umgekehrt muss aus demselben Grund bei höheren Materialstärken der Schneidgasdruck reduziert werden.

Die vorhandene Laserleistung kann damit nicht beliebig in Schnittgeschwindigkeit umgesetzt werden. Der Schneidvorgang ist gewissermaßen blockiert, weil bei höheren Schneidgeschwindigkeiten der Gasfluss aus reinem Sauerstoff, der erforderlich wäre, um das Material auch schnell genug auszutreiben, jeweils zu einem Überhandnehmen der Verbrennungsenergie führen würde. Dieser chemische Prozess ist dann nicht mehr kontrollierbar, sondern läuft in einer sich selbst erhaltenden Reaktion (Kettenreaktion) ab, die den Laserstrahl nicht mehr zur Anregung benötigt. Entsprechendes gilt für die Laserleistung bei geringeren Materialstärken. Die Schneidgeschwindigkeiten klassischer Verfahren zum Laserbrennschneiden sind hierdurch auf die eingangs genannten Werte von maximal 10 m/min begrenzt.

Ein hoher Schneidgasdruck von 5 bar und mehr kann auch bei sehr schmalen Schnittfugen, wie sie bei Verwendung stark fokussierter Laser auftreten können, erwünscht sein. In solchen Fällen sollte das Schneidgas einen entsprechenden Druck aufweisen, um überhaupt in nennenswertem Umfang in die Schnittfuge einzudringen und damit das Material austreiben zu können. Ferner haftet das Material in schmalen Schnittfugen auch stärker (z.B. adhäsiv) und muss daher mit größerer Kraft ausgetrieben werden. Auch hier tritt jedoch das Problem der Überreaktion des Sauerstoffs auf.

Die Erfindung geht nun von einem an sich bekannten Verfahren zum Lasertrennschneiden aus, bei dem, wie eingangs erläutert, mit einem hier als Schneidkopf bezeichneten Bearbeitungsgerät ein Laserstrahl auf ein Werkstück fokussiert und gleichzeitig ein Schneidgasstrom auf das Werkstück gelenkt wird. Der Schneidkopf weist zum Fokussieren des Laserstrahls eine Optik auf, die einen möglichst scharfen und/oder einstellbaren Fokuspunkt auf dem Werkstück erzeugt.

Der Schneidgasstrom wird erzeugt, indem ein oder mehrere Gasströme in den Schneidkopf eingespeist werden. Die Gasströme können in den Schneidkopf als Reingas(e) und/oder als entsprechende Mischungen eingespeist werden. Werden nachfolgend Schneidgasdrücke angegeben, handelt es sich hierbei in der Regel um Absolutdrücke. Die Drücke können hierbei an unterschiedlicher Stelle gemessen werden. Üblich ist eine Druckmessung bei der Einspeisung in den Schneidkopf. Ein entsprechender Druck kann sich jedoch auch auf den Auftreffpunkt des Schneidgases auf dem Werkstück beziehen.

Ferner werden, wie in bekannten Verfahren auch, der Schneidkopf und das Werkstück mit einer einstellbaren Vorschubgeschwindigkeit relativ zueinander bewegt. In bekannten Anlagen kann beispielsweise eine Einrichtung zum Verschieben des Werkstücks und/oder eine Einrichtung zum Verschieben des Schneidkopfs vorgesehen sein. Wichtig ist in diesem Zusammenhang die Relativbewegung zwischen Schneidkopf und Werkstück. Wie eingangs erläutert, überschreitet diese in klassischen Verfahren 10 m/min nicht.

Erfindungsgemäß ist vorgesehen, den Laserstrahl mittels eines Festkörperlasers mit einer Wellenlänge zwischen 400 nm und 2.200 nm zu erzeugen und den Schneidgasstrom bei einem Schneidgasdruck von 5 bar bis 35 bar und mit einem Gehalt von 90% bis 99,5% Sauerstoff und im verbleibenden Anteil Kohlendioxid und/oder Helium bereitzustellen. Die bezüglich der Gehalte verwendeten Prozentangaben bezeichnen beispielsweise Molprozent oder Volumenprozent. Die Anteile von Sauerstoff, Kohlendioxid und Helium können zusammen 100% ergeben, so dass sich der Schneidgasstrom vollständig aus Sauerstoff, Kohlendioxid und Helium zusammensetzt. Falls zweckmäßig, können auch weitere Komponenten im Schneidgasstrom verwendet werden. Diese Einzelmaßnahmen ermöglichen jeweils für sich, insbesondere jedoch in Kombination, deutliche Verbesserungen beim Lasertrennschneiden, die nachfolgend zusammengefasst werden:

Wie eingangs erläutert, kann es in bekannten Verfahren zum Laserbrennschneiden zu einer Überreaktion des Sauerstoffs mit dem Material des Werkstücks kommen. Dies wird erfindungsgemäß dadurch vermieden, dass die Oxidationskraft des Schneidgases durch eine Beimischung von Kohlendioxid und/oder Helium im verbleibenden Anteil vermindert wird. Die Beimischung in einem Umfang von unter 10%, beispielsweise 9%, 8%, 7%, 6%, 5%, 4%, 3%, 2%, 1% oder sogar nur 0,5% reicht dabei zur Herabsetzung der Oxidationskraft aus. Auch Kohlendioxid kann damit vorteilhafterweise als Komponente eines vorgemischten Schneidgases verwendet werden, da es bei entsprechend niedrigen Gehalten auch unter Druck in der Gasphase bleibt.

Kohlendioxid besitzt den besonderen Vorteil, dass es aufgrund seiner hohen Enthalpie und guten Wärmeleitfähigkeit eine homogene Energieverteilung über die gesamte Dicke des Werkstücks ermöglicht und damit bessere Schnittergebnisse erzielt werden können als bei der Verwendung von reinem Sauerstoff. Wie auch nachfolgend noch erläutert, sind die Einkopplungscharakteristika bei neuartigen Festkörperlasern wie Scheiben-, Faser- und Diodenlasern unterschiedlich zu jenen klassischer Laser. Derartige Laser erwärmen häufig nur einen begrenzten Bereich der Schnittfläche, d.h. der Front der Schnittfuge, die Temperatur in den übrigen Bereichen ist hingegen deutlich geringer. Dies ist insbesondere bei dicken Werkstücken kritisch. Auch dies begrenzt die Schnittgeschwindigkeit. Ferner ist eine inhomogene Erwärmung der Präzision des Schnittvorgangs nicht zuträglich.

Als Dissoziationsprodukt des Kohlendioxids kann Kohlenmonoxid entstehen, welches bei der Dissoziation Energie aufnimmt. Da das Kohlenmonoxid jedoch von einem Sauerstoffstrom umgeben ist, wird es sich unmittelbar wieder mit diesem rekombinieren und die Energie für den Schneidprozess erneut zur Verfügung stellen. Auch hieraus ergibt sich ein gewisser Wärmespeichereffekt, der eine homogene Wärmeausbreitung über die gesamte Schnittfläche fördert. Im Vergleich zu dem theoretisch ebenfalls einsetzbaren Argon, das leicht ionisierbar ist, was den Schneidprozess ggf. stört, ist Kohlendioxid wesentlich stabiler, so dass das Parameterfeld, das zur Ansteuerung einer entsprechenden Anlage verwendet wird, in einem größeren Bereich eingestellt werden kann.

Die Erfindung schafft damit einen Schneidprozess, der durch Beimischung anderer Gase zu Sauerstoff die Oxidationskraft des Sauerstoffs jeweils so stark reduziert, dass es auch bei dem Einsatz der vollen Laserleistung des verwendeten Festkörperlasers und/oder bei höheren Schneidgasdrücken - erfindungsgemäß werden, wie erwähnt, dabei 5 bar bis 35 bar verwendet - nicht zu einer Überreaktion des Schneidgases mit dem Werkstück kommt.

Grundsätzlich ist es möglich, zum Laserbrennschneiden Luft - also ein Gemisch aus Stickstoff, Sauerstoff und Argon - einzusetzen. Bereits mit Luft sind bei höheren Schneidgasdrücken und höheren Laserleistungen höhere Schneidgeschwindigkeiten realisierbar, ohne dass es zu den genannten Überreaktionen kommt. Allerdings ist bei der Verwendung von Luft als Schneidgas der Sauerstoffanteil i.d.R. zu niedrig. Ferner können bei der Verwendung eines Gemischs mit Stickstoff bei den verwendeten hohen Temperaturen Stickoxide gebildet werden, welche eine ausgesprochen geringe maximal zulässige Arbeitsplatzkonzentration (MAK) aufweisen. Die Verwendung von Luft als Schneidgas kann daher ein Risiko am Arbeitsplatz darstellen. Kohlendioxid kann im Rahmen der vorliegenden Erfindung mit Vorteil eingesetzt werden, da es nicht mit der Wellenlänge des verwendeten Lasers interferiert. Kohlendioxid kann bei sämtlichen Laserarten außer bei Kohlendioxidlasern eingesetzt werden.

Geringere als die erfindungsgemäß erwähnten Sauerstoffgehalte haben sich als nicht vorteilhaft erwiesen, weil hier die Oxidationskraft des Schneidgases stark herabgesetzt wird. Dies ist insbesondere bei schmalen Schnittfugen nachteilig, weil hier ggf. nur eine geringere Menge des Schneidgases in die Schnittfuge (bei jedoch gleichbleibend dicker Schnittfläche) in das Werkstück gelangen kann. Wie erwähnt, erlaubt es die vorliegende Erfindung ferner, ein Schneidgas vorzumischen und in vorgemischter Form zur Verfügung zu stellen, weil die geringen Gehalte an Kohlendioxid, die ggf. eingesetzt werden, auch unter Druck in der Gasphase verbleiben. Entsprechende Anlagen können damit ohne eine Gasmischeinrichtung erstellt werden, was die Erstellungskosten und die Möglichkeit von Fehlbedienungen deutlich reduziert.

Laserbrennschneidverfahren werden, wie erwähnt, zunehmend unter Verwendung neuartiger Festkörperlaser wie Scheiben-, Faser- und Diodenlasern durchgeführt. Der Begriff "Festkörperlaser" soll im Rahmen der vorliegenden Anmeldung explizit die genannten Laserarten (Scheiben-, Faser- und Diodenlaser) umfassen. Diodenlaser und Festkörperlaser im engeren Sinn werden auch unter dem Begriff "fasergängige Laser" zusammengefasst. Jedenfalls fallen unter den Begriff Festkörperlaser, wie er hier verwendet wird, nicht Excimerlaser und Kohlendioxidlaser, also Gaslaser.

Festkörperlaser weisen Wellenlängen im zuvor genannten Bereich auf und besitzen, wie nachfolgend erläutert, u.a. einen besonders hohen Wirkungsgrad und eine hohe Strahlqualität. Als Wirtskristall von Festkörperlasern wird üblicherweise Yttrium-Aluminium-Granat (YAG) verwendet, der je nach zu emittierender Wellenlänge mit unterschiedlichen Lanthaniden dotiert wird. Hierbei handelt es sich beispielsweise um Praseodym, Neodym, Holmium, Erbium, Thulium und Ytterbium.

Scheibenlaser und Faserlaser sind spezielle Formen von Festkörperlasern mit hohem Wirkungsgrad und hoher Strahlqualität. Bei Scheibenlasern weist der Laserkristall die Form einer Scheibe auf. Die für die Laserstrahlung erforderliche Energie wird durch mehrfachen Durchgang einer Pumpstrahlung durch die Laserscheibe erzeugt. Die Scheibe ist auf ihrer Rückseite reflektierend ausgebildet und dient gleichzeitig als Resonatorspiegel. Als Laserkristall kann beispielsweise ytterbiumdotierter Yttrium-Aluminium-Granat (Yb:YAG) mit einer Emissionswellenlänge von 1.030 nm verwendet werden, der beispielsweise mittels Indiumgalliumarsenid-Laserdioden bei 940 nm optisch gepumpt werden kann. Die Erfindung ist jedoch auch bei anderen Dotierungen einsetzbar und nicht auf das angegebene Beispiel beschränkt.

Bei einem Faserlaser bildet der entsprechend dotierte Kern einer Glasfaser das aktive Medium. Es handelt sich also um einen Glaslaser mit Lichtwellenleitereigenschaften. Die Laserstrahlung, welche durch die laseraktive Faser geleitet wird, erfährt aufgrund der großen Länge der Faser eine sehr hohe Verstärkung. Faserlaser werden üblicherweise optisch gepumpt, indem in den Kern der Glasfaser oder in dessen Mantel Strahlung von Diodenlasern eingekoppelt wird. Als Dotierungselement für Hochleistungs-Faserlaser können ebenfalls Ytterbium oder Neodym oder die zuvor erwähnten Lanthaniden verwendet werden.

Diodenlaser weisen in der hier in Frage kommenden Leistungsklasse mehrere Laserdioden, also mit elektrischem Strom gepumpte Halbleiterlaser, beispielsweise auf Basis von Indiumgalliumnitrid, auf. Diese können in Form sogenannter Barren, die wiederum in Stapeln zusammengefasst sind, angeordnet werden. Die Strahlung derartiger Stapel kann mittels dichroitischer und polarisationsabhängiger Spiegel ineinander gespiegelt werden. Man erhält Laserstrahlquellen mit mehreren Kilowatt optischer Leistung bei vergleichsweise sehr hohem Wirkungsgrad.

Durch die vergleichsweise kurzen Wellenlängen im Infraroten ergeben sich bei der Verwendung von Sauerstoff als Schneidgas allerdings Einkopplungscharakteristika, die für den Schneidprozess nicht optimal sind.

Der Absorptionsgrad A einer Materialoberfläche gegenüber der Laserstrahlung ist definiert als das Verhältnis der an der Materialoberfläche absorbierten Laserleistung zur eingestrahlten Laserleistung. Für opake Materialien gilt *A* = 1 - *R*, wobei *R* den Reflexionsgrad der Materialoberfläche angibt. Der Absorptionsgrad hängt von der Wellenlänge des Laserstrahls, seiner Polarisationsebene und seinem Auftreffwinkel sowie vom Materialtyp und der Materialtemperatur ab. Bei Metallen nimmt der Absorptionsgrad typischerweise in Richtung sichtbarer und ultravioletter Wellenlängen zu und in Richtung infraroter Wellenlängen ab. Der Absorptionsgrad nimmt typischerweise mit höherer Materialtemperatur zu, kann jedoch, beispielsweise bei Wellenlängen um 1.000 nm, auch abnehmen.

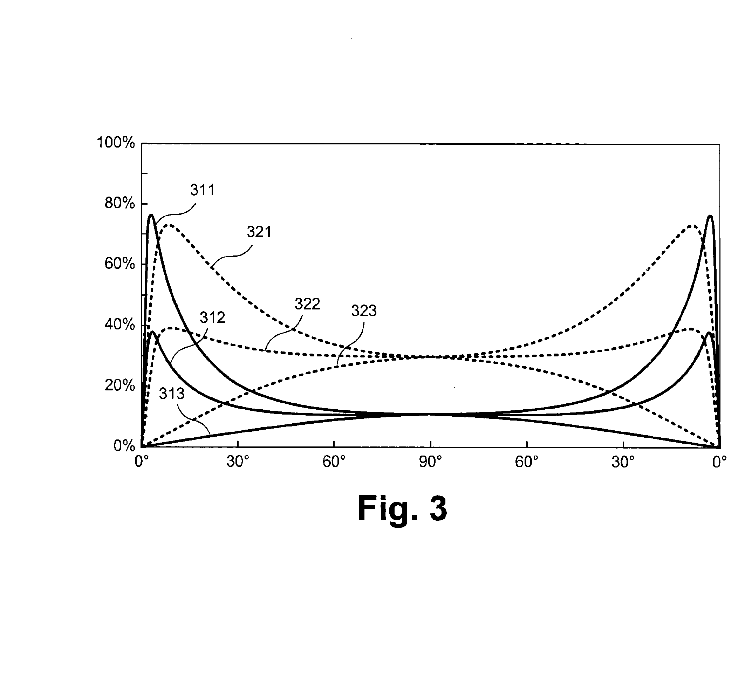

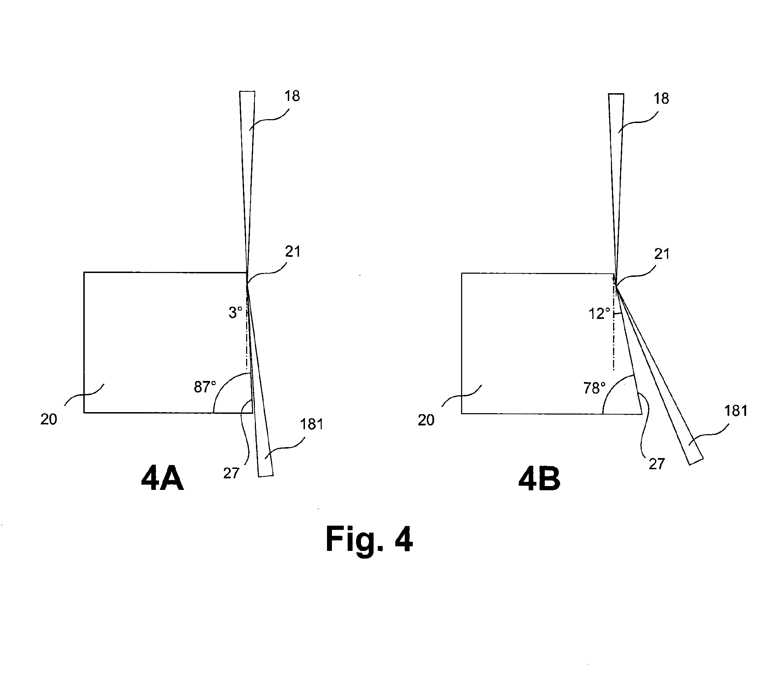

Trifft der Laserstrahl senkrecht auf eine Materialoberfläche (also mit 90°), ergibt sich kein Unterschied hinsichtlich des Reflexionsgrads *R* bzw. des Absorptionsgrads A für unterschiedliche Polarisationsebenen des Laserstrahls. Mit abnehmendem Auftreffwinkel (d.h. der Laserstrahl wird schräg auf die Werkstückoberfläche gerichtet) nimmt der Reflexionsgrad *R*_{P} für das parallel zur Auftreffebene polarisierte Licht zunächst ab, der Reflexionsgrad *R*_{S} für das senkrecht zur Auftreffebene polarisierte Licht hingegen zunächst zu. Beim sogenannten Brewsterwinkel ist der Reflexionsgrad *R*_{P} für das parallel zur Auftreffebene polarisierte Licht minimal, der Reflexionsgrad *R*_{S} für das senkrecht zur Auftreffebene polarisierte Licht beträgt hingegen nahezu eins. Entsprechend ist der Absorptionsgrad *A*_{P} für das parallel zur Auftreffebene polarisierte Licht hier maximal und der Absorptionsgrad *A*_{S} für das senkrecht zur Auftreffebene polarisierte Licht nahezu null. Dieser und die nachfolgend erläuterten Sachverhalte sind in den Figuren 3 und 4 noch näher veranschaulicht.

Beim Laserbrennschneiden wird daher vorteilhafterweise mit parallel polarisiertem Licht gearbeitet. Jedenfalls wird angestrebt, den Laserstrahl unter dem Brewsterwinkel auf das die zu bearbeitende Materialoberfläche treffen zu lassen. Bei der zu bearbeitenden Materialoberfläche handelt es sich um die typischerweise schräge Front der Schnittfuge. Der Laserstrahl wird senkrecht von oben eingestrahlt und trifft dabei, vorzugsweise unter dem Brewsterwinkel, auf die schräge Front der Schnittfuge.

Der Brewsterwinkel ist abhängig von der Temperatur und der Wellenlänge des verwendeten Lichts. Bei einem Kohlendioxidlaser, wie er klassischerweise beim Lasertrennschneiden verwendet wird (Wellenlänge z.B. 10.600 nm), beträgt der Brewsterwinkel nur ca. 3°, der Laserstrahl sollte a Iso sehr flach auf die Materialoberfläche treffen, um einen maximalen Absorptionsgrad *A*_{P} für das parallel zur Auftreffebene polarisierte Licht zu erzielen. Da der Laserstrahl jedoch nicht ideal punktförmig fokussiert ist, ergibt sich hieraus eine deutliche lineare Erstreckung des Auftreffbereichs. Der Laserstrahl wird also über eine beträchtliche Strecke von der Materialoberfläche geschnitten. Über die gesamte Schnittfläche bzw. -strecke kann der Laserstrahl mit der Materialoberfläche interagieren und diese aufheizen.

Bei kürzeren Wellenlängen, wie sie in Festkörperlasern erzeugt werden, ist der Brewsterwinkel hingegen größer. Bei einer Wellenlänge von 1.060 nm beträgt dieser beispielsweise schon ca. 12°. Der Laserstrahl sollt e also hier steiler auf die Materialoberfläche treffen. Der Laserstrahl wird damit über eine kürzere Strecke von der Materialoberfläche geschnitten als bei einem flacheren Auftreffwinkel. Der Energieeintrag und die Aufheizung sind damit enger lokal begrenzt.

Dies begrenzt, wie erläutert, die Schnittgeschwindigkeit. Ferner ist eine inhomogene Erwärmung der Präzision des Schnittvorgangs nicht zuträglich. Wie erläutert, löst jedoch der Einsatz von Kohlendioxid das erläuterte Problem aufgrund der günstigen Wärmespeichereigenschaften. Kohlendioxid besitzt damit gewissermaßen Mediatoreigenschaften, die die genannten Inhomogenitäten ausgleichen.

Die ggf. durch den Einsatz von Festkörperlasern verschlechterten Schnittergebnisse werden durch den Einsatz von Kohlendioxid im Schneidgas behoben. Durch die verminderte Oxidationskraft des Schneidgases ist jedoch gleichzeitig sichergestellt, sich hierdurch keine überschießende Reaktion mit dem Sauerstoff einstellt. Die Erfindung erlaubt es daher, die vorteilhaften Eigenschaften von Festkörperlasern, wie zuvor erläutert, ohne Qualitätseinbußen zu nutzen.

Besonders vorteilhafte Wellenlängenbereiche des erfindungsgemäß eingesetzten Festkörperlasers können beispielsweise 400 nm bis 600 nm, 600 nm bis 800 nm, 800 nm bis 1.000 nm, 1.000 nm bis 1.200 nm, 1.200 nm bis 1.400 nm, 1.400 nm bis 1.600 nm, 1.600 nm bis 1.800 nm, 1.800 nm bis 2.000 nm oder 2.000 nm bis 2.200 nm betragen. Die Wellenlänge kann beispielsweise durch eine geeignete Wahl des Dotiermaterials eingestellt werden. Hieraus ergeben sich unterschiedliche Brewsterwinkel, die beispielsweise zu unterschiedlichen Einkopplungscharakteristika führen können. Der Gehalt an Kohlendioxid und/oder Helium wird entsprechend eingestellt.

Auch Helium weist als Schneidgasbestandteil besonders vorteilhafte Eigenschaften auf, weil es eine besonders gute Wärmeleitfähigkeit besitzt. Die Energie wird dadurch in besonders effektiver Weise auf das Werkstück übertragen. Helium besitzt ferner eine geringe Viskosität, die ein entsprechendes Schneidgas auch in schmale Schnittfugen eindringen lässt und damit eine besonders effektive Austreibung bewirkt. Dies ist insbesondere in Kombination mit den verwendeten Lasern vorteilhaft, da diese besonders schmale Schnittfugen erzeugen können.

Die erfindungsgemäß verwendeten hohen Schneidgasdrücke besitzen schließlich den Vorteil, dass die Schmelze sehr effektiv aus der Schnittfuge ausgeblasen werden kann. Auch bei größeren Materialstärken muss hierbei der Schneidgasdruck nicht reduziert werden, weil es aufgrund des erfindungsgemäß eingesetzten Schneidgases nicht zu einer Überreaktion des Sauerstoffs mit dem Material des Werkstücks kommt und das Material daher nur dort, wo auch der Laserstrahl wirkt, ausgetrieben wird. Durch die erwähnten erfindungsgemäßen Maßnahmen ergeben sich daher Synergieeffekte, die sich durch die jeweiligen Einzelmaßnahmen nicht erzielen ließen. Vorteilhafte Schneidgasdrücke liegen beispielsweise bei 5 bar bis 6 bar, 6 bar bis 7 bar, 7 bar bis 8 bar, 8 bar bis 9 bar, 9 bar bis 10 bar, 10 bar bis 12 bar, 12 bar bis 14 bar, 14 bar bis 16 bar, 16 bar bis 18 bar, 18 bar bis 20 bar, 20 bar bis 25 bar, 25 bar bis 30 bar oder 30 bar bis 35 bar. Derartig hohe Schneidgasdrücke können bei herkömmlichen Verfahren nicht eingestellt werden, da hier, aufgrund der Verwendung von reinem Sauerstoff, eine Überreaktion zu befürchten wäre.

Im Rahmen der vorliegenden Erfindung wird vorteilhafterweise ein Schneidgasstrom mit einem Gehalt von wenigstens 90%, 92%, 94%, 96%, 98% oder 99% und bis zu 99,5% Sauerstoff, jedoch kein reiner Sauerstoff verwendet. Die erläuterten Prozentwerte können daher auch Obergrenzen entsprechender Bereiche angeben. Vorteilhafte Bereiche können beispielsweise 90% bis 91%, 91% bis 92%, 92% bis 93%, 93% bis 94%, 94% bis 95%, 95% bis 96%, 96% bis 97%, 97% bis 98%, 98% bis 99% oder 99% bis 99,5% Sauerstoff umfassen. Im verbleibenden Anteil wird Kohlendioxid und Helium in einem einstellbaren Verhältnis zueinander verwendet. Hierdurch ergeben sich, insbesondere aufgrund einer variablen Einstellbarkeit der erläuterten Gehalte, besondere Vorteile. Die jeweiligen Eigenschaften der genannten Komponenten, die zuvor erläutert wurden, können daher einzeln oder gemeinsam in einstellbarer Weise genutzt werden.

Vorteilhafterweise wird ein Verhältnis von Kohlendioxid zu Helium im verbleibenden Anteil von 1 zu 10 bis 10 zu 1, insbesondere von 1 zu 5, 1 zu 2, 1 zu 1, 2 zu 1 oder 5 zu 1 verwendet. Auch Teilbereiche und/oder kombinierte Bereiche hieraus können verwendet werden. Auf diese Weise lassen sich, ähnlich wie zuvor erläutert, die günstigen Eigenschaften dieser Komponenten in jeweils angepasster Weise nutzen.

Im verbleibenden Anteil wird vorteilhafterweise wenigstens 20%, 30%, 40%, 50%, 60%, 70%, 80% oder 90% Kohlendioxid und/oder Helium verwendet. Der verbleibende Anteil kann auch ausschließlich aus Kohlendioxid und/oder Helium bestehen, wenn jeweils die Eigenschaft einer anderen Komponente nicht gewünscht ist. Ein reiner Heliumstrom gewährleistet eine besonders günstige Wärmeübertragung.

Aufgrund der erfindungsgemäßen Maßnahmen werden Vorschubgeschwindigkeiten von wenigstens 10 m/min und bis zu 100 m/min, beispielsweise 10 m/min bis 20 m/min, 20 m/min bis 30 m/min, 30 m/min bis 40 m/min, 40 m/min bis 50 m/min, 50 m/min bis 60 m/min, 60 m/min bis 70 m/min, 70 m/min bis 80 m/min, 80 m/min bis 90 m/min oder 90 m/min bis 100 m/min, verwendet, insbesondere bei dünnen Werkstücken von beispielsweise 1 mm oder weniger.

Werden dickere Werkstücke von wenigstens 5 mm oder 10 mm verwendet, ermöglicht das erfindungsgemäße Verfahren immer noch Vorschubgeschwindigkeiten von wenigstens 1 m/min und bis zu 20 m/min, beispielsweise 1 m/min bis 2 m/min, 2 m/min bis 3 m/min, 3 m/min bis 4 m/min, 4 m/min bis 5 m/min, 5 m/min bis 6 m/min, 6 m/min bis 7 m/min, 7 m/min bis 8 m/min, 8 m/min bis 9 m/min, 9 m/min bis 10 m/min, 10 m/min bis 15 m/min oder 15 m/min bis 20 m/min. Auch derartige Schnittgeschwindigkeiten sind mit herkömmlichen Verfahren nicht möglich.

Das erfindungsgemäße Verfahren eignet sich insbesondere zum Schneiden von Werkstücken, die aus Materialien bestehen, die mit Sauerstoff leicht reagieren. Insbesondere kommt das erfindungsgemäße Verfahren dabei zum Schneiden von Baustahl zum Einsatz.

Vorzugsweise werden im Rahmen des erfindungsgemäßen Verfahrens Schneidparameter überwacht und der Schneidgasstrom bezüglich seiner Gehalte an Sauerstoff, Kohlendioxid und/oder Helium und/oder seines Schneidgasdrucks auf Grundlage der Schneidparameter eingestellt. Auch die Vorschubgeschwindigkeit kann auf Grundlage entsprechender Schneidparameter eingestellt werden. Das erfindungsgemäße Verfahren kann auch umfassen, eine Schnittqualität, die beispielsweise optisch ermittelt wird, zu überwachen und den Schneidgasstrom bezüglich seiner Gehalte an Sauerstoff, Kohlendioxid und/oder Helium und/oder seines Schneidgasdrucks auf Grundlage der Schnittqualität einzustellen. Auch die Vorschubgeschwindigkeit kann auf Grundlage der Schnittqualität eingestellt werden.

Eine erfindungsgemäße Anlage ist zur Durchführung des zuvor erläuterten Verfahrens eingerichtet und weist entsprechende Mittel auf. Insbesondere ist eine derartige Anlage dazu ausgebildet, eine Schnittqualität, insbesondere mit optischen Beobachtungsmitteln, zu erfassen bzw. zu überwachen und auf dieser Grundlage die zuvor erläuterte Einstellung vorzunehmen. Die Beobachtungsmittel können insbesondere Kameras aufweisen, die eine Qualität der Schnittfuge visuell erfassen. Die Erfassung kann jedoch auch beispielsweise mittels Infrarotkameras und/oder geeigneter Sensoren erfolgen.

Die Erfindung wird nachfolgend unter Bezugnahme auf die beigefügten Zeichnungen näher erläutert, die bevorzugte Ausführungsformen der Erfindung zeigen.

### Kurze Beschreibung der Zeichnungen

Figur 1 zeigt schematisch eine Anlage, die in einem Verfahren gemäß einer Ausführungsform der Erfindung verwendet werden kann.
Figur 2 zeigt ein Verfahren gemäß einer Ausführungsform der Erfindung in Form eines schematischen Ablaufplans.
Figur 3 veranschaulicht Absorptionsgrade bei unterschiedlichen Lasertypen und Polarisationswinkeln in Form eines Diagramms.
Figur 4 veranschaulicht schematisch optimale Auftreffwinkel von Laserstrahlen bei unterschiedlichen Wellenlängen.

In den Figuren tragen einander entsprechende Elemente identische Bezugszeichen und werden der Übersichtlichkeit halber nicht wiederholt erläutert.

### Ausführliche Beschreibung der Zeichnungen

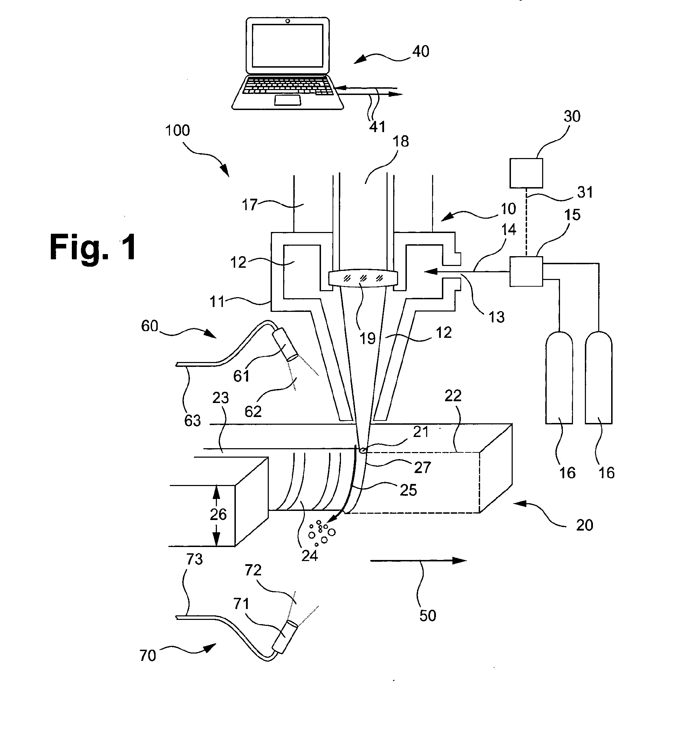

In Figur 1 ist eine Vorrichtung zum Laserbrennschneiden eines Werkstücks stark schematisiert dargestellt und insgesamt mit 100 bezeichnet. Die Bearbeitung des Werkstücks, hier mit 20 bezeichnet, erfolgt mittels eines Schneidkopfs 10, der nachfolgend kurz erläutert wird.

Der Schneidkopf 10 weist ein Gehäuse 11 mit einem Gehäuseinnenraum 12 auf. Über einen Gaseinlass 13 kann in den Gehäuseinnenraum 12 ein Schneidgas, hier mit 14 bezeichnet, eingespeist werden. Das Schneidgas 14 weist die zuvor erläuterte Zusammensetzung auf, beispielsweise 90% bis 99,5% Sauerstoff und im verbleibenden Anteil Kohlendioxid und/oder Helium.

Das Schneidgas 14 kann beispielsweise mittels einer Gasmischeinrichtung 15 bereitgestellt werden, an die beispielsweise mehrere Gasbehälter 16 mit unterschiedlichen Gasen, beispielsweise Druckgasflaschen, über geeignete Armaturen angeschlossen sind. Alternativ dazu kann auch eine vorgemischte Gasmischung als Schneidgas 14 verwendet werden. Dies ist möglich, weil der Gehalt an Kohlendioxid niedrig ist.

Die Gasmischeinrichtung 15 ist vorteilhafterweise auch zur Einstellung eines Schneidgasdrucks eingerichtet, der, wie zuvor erläutert, 5 bar bis 35 bar beträgt. Sie kann auch ausschließlich zu diesem Zweck ausgebildet sein. Zur Ansteuerung der Gasmischeinrichtung 15 kann eine Steuereinheit 30 vorgesehen sein. Die Steuereinheit 30 ist über eine geeignete Kommunikationsverbindung 31, beispielsweise ein Ansteuerkabel, mit der Gasmischeinrichtung 15 verbunden und steuert über die Kommunikationsverbindung 31 die Gasmischeinrichtung 15 an. Die Steuereinheit 30 kann ihrerseits beispielsweise an einen Steuerrechner 40 angebunden sein. Über den Steuerrechner 40 kann ein Benutzer geeignete Parameter eingeben, beispielsweise eine Vorschubgeschwindigkeit des Schneidkopfs 11 gegenüber dem Werkstück 20, hier mittels eines Pfeils 50 veranschaulicht, sowie einen Schneidgasdruck des Schneidgases 14 und/oder dessen Zusammensetzung. Der Steuerrechner 40 kann hierzu über eine entsprechende Anbindung 41 an die Steuereinheit 30 verfügen. Mittel zur Bereitstellung eines entsprechenden Vorschubs 50 des Schneidkopfs 10 gegenüber dem Werkstück 20 und/oder umgekehrt sind der Übersichtlichkeit halber nicht dargestellt.

Zum Schneiden des Werkstücks 20 kann in den Schneidkopf 10 ein Laserstrahl 18, im Rahmen der vorliegenden Erfindung ein Festkörperlaserstrahl 18 mit einer Wellenlänge von 400 bis 2.200 nm, eingekoppelt werden. Der Laserstrahl 18 wird mittels eines Festkörperlasers 17, der hier stark schematisiert und nur teilweise dargestellt ist, erzeugt. Über eine geeignete Optik 19, die im dargestellten Beispiel der Einfachheit halber als Einzellinse veranschaulicht ist, kann der Laserstrahl 18 auf eine Position 21 auf dem Werkstück 20 fokussiert werden. Wie bereits erläutert, ist diese Position 21 nicht, wie hier vereinfacht dargestellt, punktförmig sondern erstreckt sich eine gewisse Strecke über die Front 27 der Schnittfuge 23.

Bei dem erfindungsgemäßen Verfahren handelt es sich um ein Verfahren zum Laserbrennschneiden. Dies umfasst, wie eingangs erläutert, ein Aufschmelzen eines Werkstücks 20 mittels eines Lasers bzw. eine entsprechende Temperaturerhöhung, ab welcher das Material des Werkstücks 20 mit dem in dem Schneidgas 14 enthaltenen Sauerstoff zu reagieren beginnt. Mit anderen Worten umfasst der durch den Schneidkopf 10 bewirkte Schnittvorgang zumindest teilweise eine laserunterstützte Verbrennung des Materials des Werkstücks 20. Der Druck des Schneidgases 14, wie erläutert wenigstens 6 bar, bewirkt ein Austreiben des schmelzflüssig gewordenen Materials des Werkstücks 20, hier mit einem Pfeil 25 veranschaulicht.

Das Werkstück 20 ist hier stark schematisiert dargestellt und entlang einer (nur zeichnerisch vorhandenen) Schnittkante 22 in einer Teilschnittansicht dargestellt. Eine durch den Laserstrahl 18 und die Wirkung des Schneidgases 14 erzeugte Schnittfuge ist mit 23 bezeichnet. Eine Schnittfläche 24, d.h. der Rand der Schnittfuge 23, weist charakteristische Riefen auf, die hier stark schematisiert dargestellt sind. Die Breite der Schnittfuge 23, die Ausprägung der Riefen 24 und damit die Präzision eines in dem Werkstück 20 erzeugten Schnitts richtet sich, wie zuvor erläutert, nach der Wahl der Schneidparameter, beispielsweise der Zusammensetzung des Schneidgases 14, dessen Druck und der Vorschubgeschwindigkeit 50. Wie ebenfalls erläutert, ist insbesondere letztere stark von einer Materialstärke 26 abhängig.

Die Front 27 der Schnittfuge 23 bildet sich unter dem Einfluss des Laserstrahls 18 und des Schneidgases 14 schräg aus. Vorzugsweise ist die Front 27 der Schnittfuge 23 im Brewsterwinkel gegenüber der Einstrahlrichtung des Laserstrahls 18 geneigt.

Gemäß einer besonders vorteilhaften Ausführungsform der Erfindung können, wie erläutert, Beobachtungsmittel 60 vorgesehen sein, die beispielsweise geeignete Kameras 61 umfassen können. Die Kameras 61 können einen Schneidbereich des Werkstücks 20, eine Schnittfuge 23 und dergleichen (vgl. Beobachtungskegel 62) erfassen und hierdurch eine Qualität des Schnittvorgangs überwachen. Über entsprechende Anbindungen 63 können auch die Beobachtungsmittel 60 beispielsweise an die Steuereinheit 30 und/oder den Steuerrechner 40 angebunden sein. Entsprechende Beobachtungsmittel 60 können oberhalb und unterhalb des Werkstücks (dort mit 70 bzw. 71 bis 73 bezeichnet) angeordnet sein.

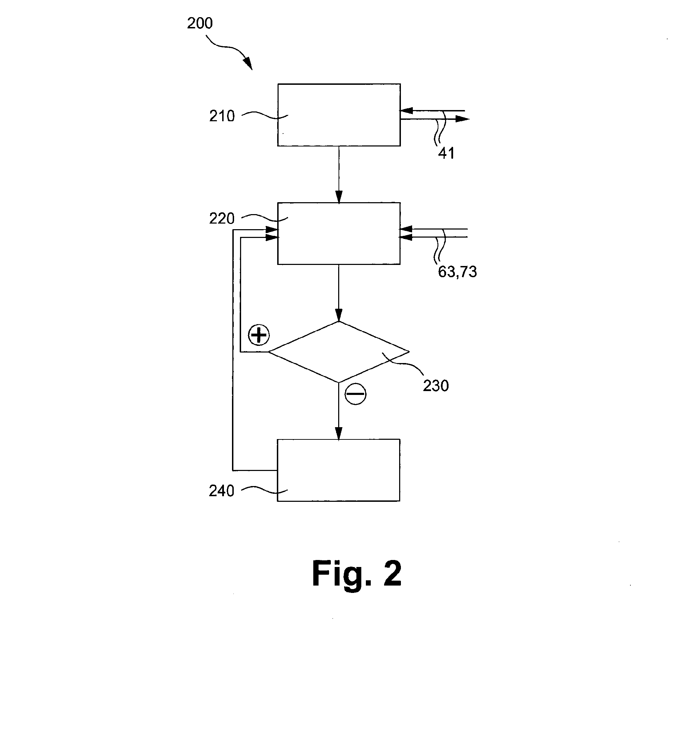

In Figur 2 ist ein Verfahren gemäß einer besonders bevorzugten Ausführungsform der Erfindung schematisch dargestellt und insgesamt mit 200 bezeichnet. In dem Verfahren 200 sind teilweise auch Vorrichtungselemente der Anordnung 100 gezeigt, die mit entsprechenden Bezugszeichen versehen sind. Das dargestellte Verfahren 200 eignet sich insbesondere zur Optimierung eines Schnittvorgangs mittels des Schneidkopfs 10.

In einem Schritt 210 werden, beispielsweise über eine entsprechende Anbindung 41 wie zuvor erläutert, anfängliche Bedingungen eingestellt, beispielsweise eine anfängliche Zusammensetzung eines Schneidgases 14 und/oder ein anfänglicher Schneidgasdruck.

In einem darauf folgenden Schritt 220 wird, beispielsweise durch Auswerten entsprechender Signale über die Anbindungen 63 bzw. 73 der Beobachtungsmittel 60 bzw. 70 eine Qualität eines Schnittvorgangs bestimmt.

In einem Schritt 230 wird überprüft, ob die in dem Schritt 220 bestimmte Schnittqualität einem Wunsch- bzw. Sollwert entspricht. Falls ja (+) erfolgt zunächst keine Änderung von entsprechenden Parametern und das Verfahren wird bei Schritt 220 fortgesetzt. Ein entsprechender Zyklus (Überwachungszyklus) kann mit beliebiger Frequenz durchlaufen werden, sodass eine kontinuierliche bzw. pseudokontinuierliche Überwachung des Trennvorgangs ermöglicht wird.

Entspricht hingegen das Ergebnis der Überprüfung aus Schritt 230 (noch) nicht dem Wunsch- bzw. Vorgabewert (-), wird in einem Schritt 240 eine entsprechende Änderung vorgenommen, beispielsweise der Druck des Schneidgases erhöht und/oder dessen Zusammensetzung verändert. Beispielsweise kann dann, wenn ein bestimmter Qualitätsfaktor wie eine besonders breite Schnittfuge 23, darauf hindeutet, dass eine zu hohe Oxidationskraft des Schneidgases vorliegt, der Druck des Schneidgases und/oder dessen Sauerstoffgehalt verringert werden. Das Verfahren kann dann erneut mit Schritt 220 fortgesetzt werden.

Figur 3 veranschaulicht Absorptionsgrade bei unterschiedlichen Lasertypen und Polarisationswinkeln in Form eines Diagramms 300. Auf der Abszisse ist dabei der Einfallswinkel zur Oberfläche des bearbeiteten Materials, hier beispielsweise der Front 27 der Schnittfuge 23 in Grad angegeben. Bei einem Winkel von 90°trifft der Laserstrahl senkrecht auf das Material, bei einem Winkel von 0°verläuft der Laserstrahl parallel zur Materialoberfläche.

Auf der Ordinate ist der sich hierdurch ergebende Absorptionsgrad A in Prozent angegeben. Mit den Kurven 311 bis 313 sind Absorptionsspektren eines Kohlendioxidlasers mit hier 10.600 nm bei einer Materialtemperatur von 1.500 °C, mit den Kurven 321 bis 323 Absorptionsspektren eines Festkörperlasers mit hier 1.060 nm bei einer Materialtemperatur von 1.400 °C, angegebe n. Die Kurven 311 bis 313 und 321 bis 323 betreffen jeweils Eisen.

Mit 311 bzw. 321 sind jeweils die Spektren parallel, mit 312 bzw. 322 die Spektren zirkular und mit 313 bzw. 323 die Spektren senkrecht polarisierten Lichts bezeichnet. Wie ersichtlich, ergeben sich bei relativ flachen Auftreffwinkeln jeweils Maxima in den Absorptionsgraden des parallel orientierten Lichts 311 und 321 (sowie des zirkular polarisierten Lichts 312 und 322). Diese entsprechen den jeweiligen Brewsterwinkeln von 3°(Kohlendioxidlaser, Spektrum 311) bzw. 12°(Festkörperlaser, Spektrum 321).

Figur 4 veranschaulicht in den Teilfiguren 4A und 4B schematisch optimale Auftreffwinkel von Laserstrahlen 18 bei unterschiedlichen Wellenlängen eines Lasers auf eine Materialoberfläche, hier beispielsweise die Front 27 der Schnittfuge 23. Die Front 27 der Schnittfuge 23 ist in der Praxis gekrümmt ausgebildet und hier idealisiert als Schräge dargestellt. Ein reflektierter Anteil der Laserstrahlen 18 ist jeweils mit 181 bezeichnet.

Teilfigur 4A zeigt den für einen Kohlendioxidlaser optimalen Auftreffwinkel entsprechend dem Brewsterwinkel von 3° (Parameter e ntsprechend Figur 3). Wie ersichtlich, verlaufen sowohl der eingestrahlte Laserstrahl 18 als auch der reflektierte Anteil 181 eine beträchtliche Strecke nahezu parallel zur Front 27 der Schnittfuge 23, wodurch ein entsprechend homogener, großflächiger Energieeintrag möglich ist.

Teilfigur 4B zeigt hingegen den für einen Festkörperlaser optimalen Auftreffwinkel entsprechend dem Brewsterwinkel von 12°(Parameter entsprechend Figur 3). Wie ersichtlich, kann hier nur ein wesentlich lokal begrenzterer Energieeintrag erfolgen. Hierdurch entstehende Inhomogenitäten können durch die Verwendung des erfindungsgemäßen Schneidgases (mit Kohlendioxid und/oder Helium) ausgeglichen werden.

## Patentansprüche

1. Verfahren (200) zum Laserbrennschneiden, bei dem mittels eines Schneidkopfs (10) ein Laserstrahl (18) auf ein Werkstück (20) fokussiert und ein Schneidgasstrom (14) auf das Werkstück (20) gelenkt wird, wobei der Schneidkopf (10) und das Werkstück (20) mit einer einstellbaren Vorschubgeschwindigkeit (50) relativ zueinander bewegt werden,
**dadurch gekennzeichnet, dass** der Laserstrahl (18) mittels eines Festkörperlasers (17) mit einer Wellenlänge von 400 bis 2.200 nm erzeugt wird und der Schneidgasstrom (14) bei einem Schneidgasdruck von 5 bar bis 35 bar und mit einem Gehalt von 90% bis 99,5% Sauerstoff und im verbleibenden Anteil Kohlendioxid und/oder Helium bereitgestellt wird.

2. Verfahren (200) nach Anspruch 1, bei dem der Schneidgasstrom (14) mit einem Gehalt von wenigstens oder höchstens 92%, 94%, 96%, 98% oder 99% Sauerstoff und im verbleibenden Anteil Kohlendioxid und/oder Helium bereitgestellt wird.

3. Verfahren (200) nach Anspruch 1 oder 2, bei dem in dem verbleibenden Anteil des Schneidgasstroms (14) Kohlendioxid und Helium in einem einstellbaren Verhältnis zueinander verwendet werden.

4. Verfahren (200) nach einem der vorstehenden Ansprüche, bei dem ein Verhältnis von Kohlendioxid zu Helium in dem verbleibenden Anteil von 1 zu 10 bis 10 zu 1, insbesondere von 1 zu 5, 1 zu 2, 1 zu 1, 2 zu 1 oder 5 zu 1 verwendet wird.

5. Verfahren (200) nach einem der vorstehenden Ansprüche, bei dem in dem verbleibenden Anteil wenigstens 10%, 20%, 30%, 40%, 50%, 60%, 70%, 80% oder 90% Kohlendioxid und/oder Helium verwendet werden.

6. Verfahren (200) nach einem der vorstehenden Ansprüche, bei dem der Schneidgasstrom (14) bei einem Druck von wenigstens oder höchstens 6 bar, 7 bar, 8 bar, 9 bar, 10 bar, 11 bar, 12 bar, 13 bar, 14 bar, 15 bar, 20 bar oder 25 bar bereitgestellt wird.

7. Verfahren (200) nach einem der vorstehenden Ansprüche, bei dem als Vorschubgeschwindigkeit (50) 10 m/min bis 100 m/min verwendet werden.

8. Verfahren (200) nach einem der Ansprüche 1 bis 6, bei dem ein Werkstück mit einer Dicke von wenigstens 5 mm oder 10 mm verwendet wird, und bei dem als Vorschubgeschwindigkeit (50) 1 m/min bis 20 m/min verwendet werden.

9. Verfahren (200) nach einem der vorstehenden Ansprüche, bei dem ein eisenhaltiges Material, insbesondere Baustahl geschnitten wird.

10. Verfahren (200) nach einem der vorstehenden Ansprüche, bei dem eine Schnittqualität überwacht wird.

11. Vorrichtung (100), die zur Durchführung eines Verfahrens nach einem der vorstehenden Ansprüche eingerichtet ist, mit einem Schneidkopf (10), mittels dessen ein Laserstrahl (18) auf ein Werkstück (20) fokussierbar und ein Schneidgasstrom (14) auf das Werkstück (20) lenkbar ist, und mit einem Festkörperlaser (17), der zur Erzeugung des Laserstrahls (18) bei einer Wellenlänge von 400 bis 2.200 nm eingerichtet ist, wobei der Schneidkopf (10) und das Werkstück (20) mit einer einstellbaren Vorschubgeschwindigkeit (50) relativ zueinander bewegbar sind und wobei Mittel vorgesehen sind, die dafür eingerichtet sind, den Schneidgasstrom (14) bei einem Schneidgasdruck von 5 bar bis 35 bar und mit einem Gehalt von 90% bis 99,5% Sauerstoff und im verbleibenden Anteil Kohlendioxid und/oder Helium bereitzustellen.

12. Vorrichtung (100) nach Anspruch 11, die eine Beobachtungseinheit (60, 70), insbesondere mit Überwachungskameras (61, 71) aufweist.

13. Verwendung einer Gaszusammensetzung, die einen Gehalt von 90% bis 99,5% Sauerstoff und im verbleibenden Anteil Kohlendioxid und/oder Helium aufweist, zum Lasertrennschneiden, insbesondere in einem Verfahren (200) nach einem der Ansprüche 1 bis 10 und/oder in einer Vorrichtung (100) nach einem der Ansprüche 11 oder 12.
